# EUROPÄISCHE PATENTANMELDUNG

(11) **EP 1 338 366 A1**
(43) Veröffentlichungstag der Anmeldung: **27.08.2003**
(21) Anmeldenummer: 03002365.9
(22) Anmeldetag: 04.02.2003
(51) Int. Cl.: B23G 5/18

(54) **Gewindefräswerkzeug für grössere Gewindelängen**

(30) Priorität: 16.02.2002 DE 20202378 U
(71) Anmelder: Hüller Hille GmbH, 71636 Ludwigsburg (DE)
(72) Erfinder: Gross, Jürgen, 71640 Ludwigsburg (DE)
(74) Vertreter: Dahlkamp, Heinrich-Leo, Dipl.-Ing.

(57) **Zusammenfassung**

Gewindefräswerkzeug für größere Gewindelängen mit einem Schaft (1) und einem Gewindefrästeil (2) zur Hertstellung eines Gewindes in der Wandung von Bohrungen (9) mit Fräszähnen (4), die zwischen gerade oder wendelförmig verlaufenden Spannuten (3) gerade oder wendelförmig in Achsrichtung zueinander in Reihen angeordnet sind, wobei ein oder mehrere mittlere Bereiche (B) der Fräszähne (4) in Achsrichtung auf ihrem gesamten Umfang freigeschnitten sind.

## Beschreibung

Die Neuerung bezieht sich auf ein Gewindefräswerkzeug für größere Gewindelängen mit einem Schaft und einem Gewindefrästeil zur Herstellung eines Gewindes in der Wandung von Bohrungen mit Fräszähnen, die zwischen gerade oder wendelförmig verlaufenden Spannnuten gerade oder wendelförmig in Achsrichtung zueinander in Reihen angeordnet sind.

Bei Bohrungen mit relativ kleinem Durchmesser, insbesondere < 8 mm und einem Längen-Durchmesser - Verhältnis von > 3, d.h. also einer gleichzeitigen Länge von > 24 mm, lässt sind das Innengewinde wirtschaftlich und prozesssicher bislang nur durch Furchen oder Gewindeschneiden herstellen. Bei den zum Stand der Technik gehörigen Gewindefräsern besteht das Problem, dass die Werkzeuge für die auftretenden Bearbeitungskräfte nicht steif genug ausgelegt werden können, wenn die Werkzeuge über der gesamten Gewindelänge arbeiten.

Aus der DE 196 51 425 A1 ist ein Gewindefräser mit einem Schaft und einem Frästeil bekannt, wobei der Frästeil in Umfangsebenen liegende Gewindezähne aufweist und in bestimmten Abständen freie Teilungen ohne Gewindezähne angeordnet sind. Wenn dabei z.B. in jeder zweiten Teilung die Gewindezähne vollständig fehlen, werden dadurch die Schnittkräfte und das Biegemoment im kritischen Bereich am Übergang vom Frästeil zum Schaft reduziert. Es hat sich gezeigt, dass diese Art eines Gewindefräsers immer noch relativ stark auf Biegung beansprucht wird und dass die Bearbeitung relativ lange dauert.

In der DE 198 17 018 A1 ist ebenfalls ein Gewindefräswerkzeug für größere Gewindelängen beschrieben, wobei in Achsrichtung und/oder in Umfangsrichtung gesehen jeweils eine Zahnaussparung zwischen zwei vollen Gewindefräszähnen angeordnet ist. Auch hierbei wird während der Bearbeitung das Frästeil über die gesamte Länge gleichzeitig beansprucht.

Der Erfindung liegt die Aufgabe zu Grunde, ein Gewindefräswerkzeug vorzuschlagen, bei dem die vorstehenden Probleme nicht auftreten und das auch bei extrem großen Gewindelängen einsetzbar ist.

Die Lösung dieser Aufgabe ist im Schutzanspruch 1 beschrieben. Die Unteransprüche 2 bis 5 enthalten sinnvolle Ausführungsformen dazu.

Erfindungsgemäß ist vorgesehen, dass das Gewindefräswerkzeug in Achsrichtung ein oder mehrere mittlere Bereiche besitzt, wo die Fräszähne auf ihrem gesamten Umfang vollständig freigeschnitten sind. Auf diese Weise ist der Gewindefrästeil mehrstufig ausgebildet.

Insbesondere hat es sich als günstig erwiesen, ihn dreistufig auszubilden, wobei in Achsrichtung mindestens zwei Schneidbereiche einen dazwischen liegenden freigeschnittenen Bereich ohne Fräszähne begrenzen.

Bei der Bearbeitung kann das Gewindefräswerkzeug sowohl eine zirkulare Zustellbewegung als auch eine schraubenförmige Vorschubbewegung durchführen.

Das Gewindefräswerkzeug ist vorzugsweise für Bohrungen mit einem Durchmesser D < 8 mm und einem Verhältnis L der Bohrung zum Durchmesser D von L zu D > 3 vorgesehen. Es hat sich gezeigt, dass auch bei derartigen Bohrungen mit dem erfindungsgemäßen Gewindefräswerkzeug einwandfrei das erforderliche Gewinde hergestellt werden kann, ohne dass die Stabilität des Gewindefräswerkzeug beeinträchtigt wird.

Erfindungsgemäß kann zur Herstellung einer Bohrung im Werksstück zusätzlich am freien Ende des Gewindefrästeiles ein als stirnschneidendes Werkzeug ausgebildetes Bohrteil angeordnet sein. Durch entsprechenden Anschliff wird dabei die Bohrspitze als stirnschneidendes Werkzeug ausgebildet. Dadurch ist es möglich, die gesamte Gewindefertigung einschließlich Kernloch mit einem Werkzeug durchzuführen. Dies führt zur erheblichen Reduzierung der Nebenzeiten.

Das erfindungsgemäße mehrstufige Gewindefräswerkzeug wird anhand der beigefügten Figuren 1 bis 5 beispielsweise näher erläutert. Es zeigen
- Fig. 1: einen Gewindefräser nach dem Stand der Technik
- Fig. 2: den mehrstufigen Bohrgewindefräser gemäß der Erfindung
- Fig. 3: eine vergrößerte Darstellung zu Fig. 2
- Fig. 4: Einzelheit zu Fig. 3 und
- Fig. 5: Gewindebearbeitung in sieben nacheinander durchzuführenden Abschnitten.

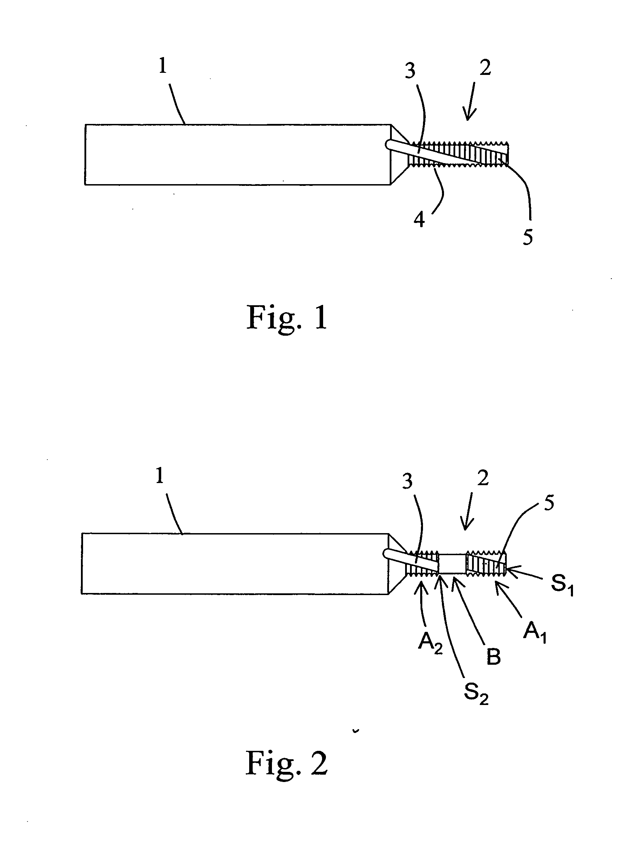

Der zum Stand der Technik gehörige Gewindefräser nach Fig. 1 besitzt einen Schaft 1 und ein Gewindefrästeil 2 mit sich über die gesamte Länge des Gewindefrästeiles 2 erstreckenden Stollen 5 mit Fräszähnen 4. Zwischen den wendelförmig angeordneten Stollen 5 sind jeweils Spannnuten 3 angeordnet.

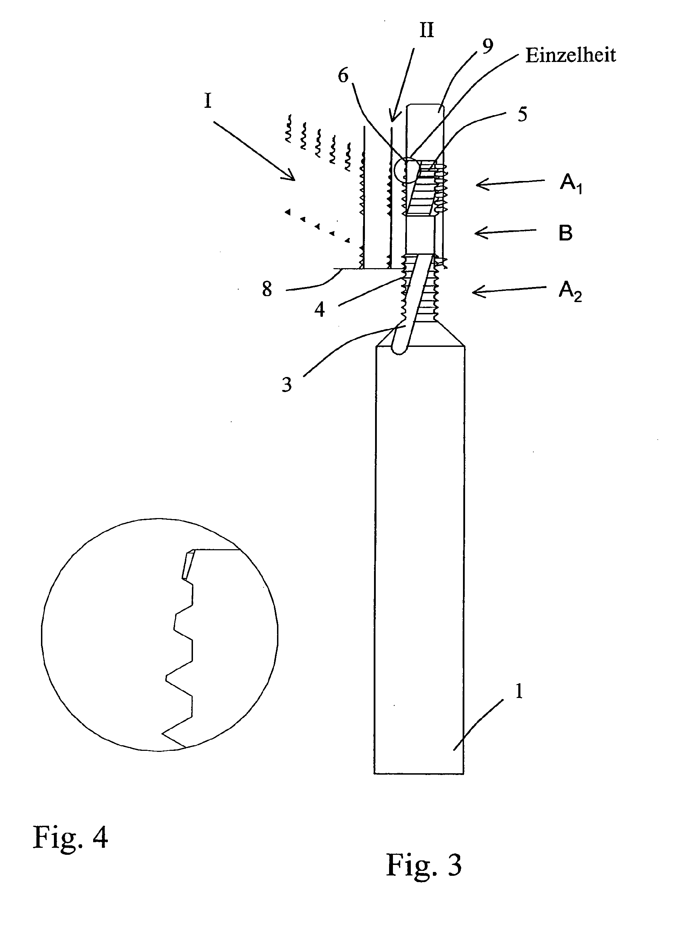

Das erfindungsgemäße, insbesondere in den Figuren 2 und 3 dargestellte Gewindefräswerkzeug besitzt ein Gewindefrästeil 2, das in Achsrichtung dreistufig angeordnet ist, wobei in Achsrichtung von der Spitze zum Schaft 1 hin zunächst ein erster Schneidbereich A₁, dann ein freigeschnittener Bereich B und dann ein zweiter Schneidbereich A₂ vorhanden ist. Die drei Bereiche A₁, A₂ und B besitzen dabei in etwa in Achsrichtung dieselbe Länge.

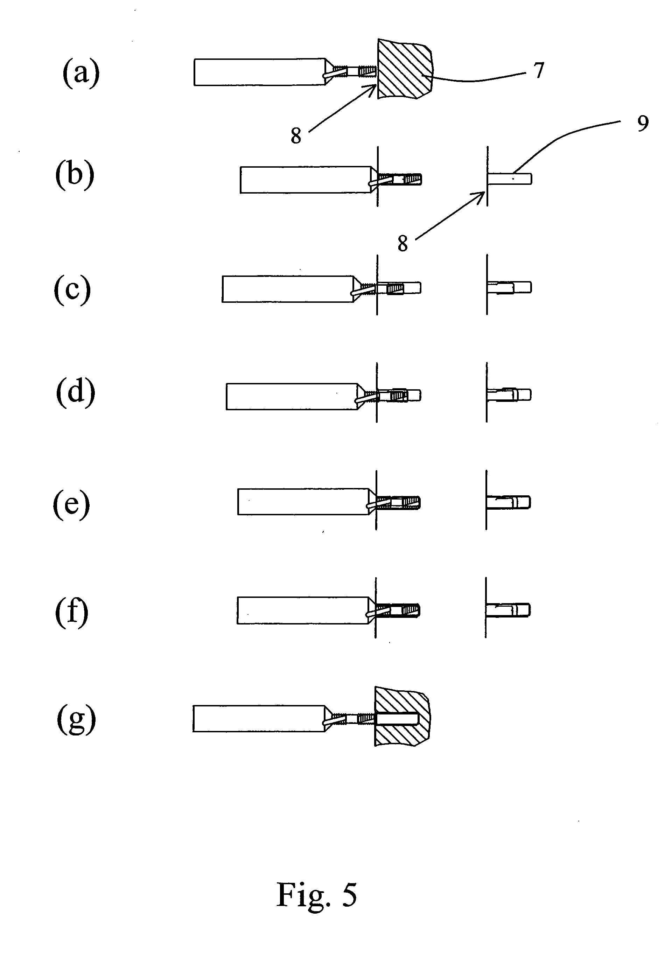

In Fig. 3 ist das erfindungsgemäße Gewindefräswerkzeug in einer Bohrung 9 eines Werkstückes 7 während des Bearbeitungsvorganges dargestellt. An der Spitze des Frästeiles 2 ist das angeschliffene Bohrteil 6 schematisch dargestellt. Nachdem mit dem Bohrteil 6 zunächst die Bohrung 9 hergestellt worden ist (vgl. Fig. 5 b), wird durch eine kreisende Bewegung des Frästeiles 2 um die Längsachse der Bohrung 9 das Gewinde hergestellt. Dazu sind im oberen Teil der Fig. 2 die folgenden beiden Bearbeitungsvorgänge dargestellt:
I das aktive Schneiden beim zirkularen Eintauchen der Fräszähne 4 auf maximale Schnitttiefe, die durch eine einmalige Zirkularbewegung um die Drehachse der Bohrung 9 erreicht wird,
II das aktive Schneiden bei der wendelförmigen Vorschubbewegung.

In Fig. 5 ist die gesamte Gewindebearbeitung in sieben Abschnitten a bis g dargestellt:

Abschnitt a zeigt die Ausgangsposition mit dem Gewindefräswerkzeug direkt oberhalb der Werkstückaußenkante 8 des Werkstückes 7.

Abschnitt b zeigt die Herstellung der Bohrung 9, wobei mit Hilfe des Bohrteiles 7 mit sich drehendem Gewindefräswerkzeug durch gleichzeitige axiale Bewegung ein Kernloch erzeugt wird. Im unteren Bereich ist die fertige Bohrung 9 im Werkstück 7 dargestellt.

Im Abschnitt c wird das Gewindefräswerkzeug über eine 90°-Schleife durch zirkulares Eintauchen (Wälzfräsen) entsprechend Darstellung I von Fig. 3 eingefahren. Hierbei finden Bewegungen in X-, Y- und Z-Richtung statt, wobei die Wirkbewegung sowohl radial als auch teilweise axial ist und das Werkzeug einen sogenannten Linienkontakt besitzt.

In den Abschnitten d und e findet die schraubenförmige Zustellbewegung (in X-, Y- und Z-Richtung) mit der ausschließlich axialen Wirkbewegung statt. Hierbei ist ein Punktkontakt an den jeweils ersten Schneiden S₁ und S₂ der beiden Schneidenbereiche A₁ und A₂ vorhanden. In Abschnitt d ist dabei zunächst nur die Schneide S₁ im Eingriff, während in der Darstellung gemäß Abschnitt e beide Schneiden S₁ und S₂ im Eingriff sind. Im Abschnitt f wird das Wälzfräsen durch zirkulares Ausfädeln des Gewindefräswerkzeug um 90° beendet.

Abschnitt g zeigt wiederum die Endposition des Gewindefräswerkzeuges außerhalb der Bohrung 9.

Die Vorteile bei Verwendung des erfindungsgemäßen Gewindefräswerkzeuges gegenüber dem Stand der Technik lassen sich unter Hinweis auf die in Fig. 5 dargestellten Bearbeitungsabschnitte wie folgt zusammenfassen:
- Die Kontaktlänge bei der Bearbeitung mit dem erfindungsgemäßen Gewindefräswerkzeug beträgt nur ca. 1/3 gegenüber der Bearbeitung mit herkömmlichen Gewindefräswerkzeugen. Dadurch ergeben sich geringere Verspankräfte, sodass wiederum die Werkzeuglänge und somit die Gewindetiefe erhöht werden kann (vgl. Abschnitte a bis c).
- Die Anzahl der aktiven Schneiden bei schraubenförmiger Zustellbewegung wird entsprechend der Zahl der freigeschnittenen Bereiche vervielfacht. Bei dem hier dargestellten zweistufigen Gewindefräser mit zwei Schneidenbereichen A₁ und A₂ mit einem dazwischen liegenden freigeschnittenen Bereich B ergeben sich insgesamt vier aktive Schneiden. Diese gleichzeitig arbeitenden Schneiden S₁ und S₂ führen zu einer Reduzierung der Bearbeitungszeit und des Vorschubweges V (vgl. Fig. 5e).
- Anstelle eines Linienkontaktes herrscht bei Abschnitt b beim Herstellen der Bohrung 9 (Senken und Fasen) nur noch Punktkontakt, wodurch die Zerspankräfte verringert werden und die Werkzeuglänge und somit die Gewindetiefe erhöht werden kann.
- Bei Ausbildung des Gewindefräswerkzeuges zusätzlich als stirnschneidendes Senkwerkzeug kann in einem ersten Arbeitsschritt die Bohrung 9 (das Kernloch) des Gewindes und in einem zweiten Arbeitsschritt das Gewinde bearbeitet werden. Hierdurch entfällt ein zwischenzeitlicher Werkzeugwechsel, wodurch die Nebenzeiten verringert werden. Außerdem entfällt das Reversieren der Spindel, die Spindelbelastung nimmt ab und es ist eine geringerer Kernlochtiefe im Verhältnis zur Gewindelänge möglich.

### Bezugszeichenliste:

- 1: Schaft
- 2: Gewindefrästeil
- 3: Spannnute
- 4: Fräszähne
- 5: Stollen
- 6: Bohrteil
- 7: Werkstück
- 8: Werkstückaußenkante
- 9: Bohrung

- A₁: erster Schneidenbereich
- A₂: zweiter Schneidenbereich
- S₁: erste Schneide von A₁
- S₂: erste Schneide von A₂
- B: freigeschnittener Bereich von 2 (in Achsrichtung zwischen A₁ und A₂)
- I: aktives Schneiden der Fräszähne 4 beim zirkularen Eintauchen auf maximale Schnitttiefe
- II: aktives Schneiden der Fräszähne 4 bei der wendelförmigen Vorschubbewegung

- V: Vorschubweg

## Patentansprüche

1. Gewindefräswerkzeug für größere Gewindelängen mit einem Schaft (1) und einem Gewindefrästeil (2) zur Herstellung eines Gewindes in der Wandung von Bohrungen (9) mit Fräszähnen (4), die zwischen gerade oder wendelförmig verlaufenden Spannnuten (3) gerade oder wendelförmig in Achsrichtung zueinander in Reihen angeordnet sind, **dadurch gekennzeichnet, dass** in Achsrichtung ein oder mehrere mittlere Bereiche (B) der Fräszähne (4) auf ihrem gesamten Umfang freigeschnitten sind.

2. Gewindefräswerkzeug nach Anspruch 1, **dadurch gekennzeichnet, dass** das Gewindefrästeil (2) in Achsrichtung mindestens zwei Schneidbereiche (A₁, A₂) mit einem dazwischenliegenden freigeschnittenen Bereich (B) ohne Fräszähne (4) besitzt.

3. Gewindefräswerkzeug nach Anspruch 1 oder 2, **dadurch gekennzeichnet, dass** das Gewindefräswerkzeug bei der Bearbeitung eine
a) zirkulare Zustellbewegung
b) schraubenförmige Verschraubbewegung durchführt.

4. Gewindefräswerkzeug nach Anspruch 1, 2 oder 3, **dadurch gekennzeichnet, dass** zur Herstellung einer Bohrung (9) im Werkstück (7) am freien Ende des Gewindefrästeiles (2) ein als stirnschneidendes Werkzeug ausgebildetes Bohrteil (6) angeordnet ist.

5. Gewindefräswerkzeug nach Anspruch 1, 2, 3 oder 4, **dadurch gekennzeichnet, dass** das Gewindefräswerkzeug für Bohrungen (9) mit einem Durchmesser D < 8 mm einem Verhältnis Länge L der Bohrung zum Durchmesser D von L zu D > 3 vorgesehen ist.
